# EUROPEAN PATENT SPECIFICATION

(11) **EP 1 653 668 B1**
(45) Date of publication and mention of the grant of the patent: **13.02.2008**
(21) Application number: 04292547.9
(22) Date of filing: 26.10.2004
(51) Int. Cl.: H04L 12/28

(54) **Restricted WLAN access for unknown wireless terminal**
Beschränkter WLAN-Zugriff für eine unbekannte Mobilstation
Accès restreint au reseau local sans fil pour un terminal sans fil inconnu

(43) Date of publication of application: 03.05.2006
(73) Proprietor: Alcatel Lucent, 75008 Paris (FR)
(72) Inventor: Gass, Raymond, 67150 Bolsenheim (FR)
(74) Representative: Schmidt, Werner Karl

(56) References cited:
- EP-A- 1 398 939
- WO-A-20/04013986
- US-A1- 2004 196 864
- US-A1- 2004 198 220
- US-A1- 2004 203 593

## Description

### Technical Field

The present invention relates to a wireless terminal comprising an interface for a wireless link to a local area network LAN being at least partly a wireless LAN WLAN and an access point AP of WLAN. The wireless terminal and the AP comprise each an interface for the wireless link and means for interacting via the interface by exchanging data frames, the interacting means being adapted for constructing data frames for transmission and for decoding received data frames. Furthermore, the present invention is also related to a method for setting up a wireless link between a wireless terminal and an AP of a WLAN.

### Background of the invention

Many public and private sector organizations as well as companies or company groups use since years so called local area networks LAN. Such LAN are built by wiring different terminals like computers, printers or other kind of terminals allowing e.g. the set up of a call (using voice over IP). The automatic management and control of data flow through the LAN are performed by switches, a task now performed by powerful servers. Those LANs provide access to local information to persons (users) who connect to a network access point, e.g. a terminal equipped with a fixed or removable LAN card. Since LAN are also interconnected with other communication networks like Internet/IP type public data networks and/or public switched telephone networks (PSTN), such users may be allow to access those communication networks.

The networking of computers has added a great deal of functionality to the standard desktop computer. It gives a possibility to share resources allowing people to work together more conveniently. In order to allow computers to work together, the Institute of Electrical and Electronics Engineers, Inc. (IEEE) has created standards to promote commonality and interchangeability throughout various disciplines of the electronic arts. For example, IEEE Standard 802 defines an Ethernet network. By promoting standards, IEEE has allowed different types of devices manufactured by different companies to successfully communicate with each other. All the terminals wired together to form a network are referred generally as end node devices. A LAN is the subsection of the network also known to those skilled in the art as a broadcast domain. Hubs, bridges or switches are used in the same physical segment or segments connecting all end node devices. End node devices can communicate with other end node devices on the same LAN without the need for a router. A router or gateway device is required when communications have to be setup between end node devices on other LAN segments. Specifically, each LAN is separated from an other LAN by such a device. As networks expand, more such devices are needed to separate users into LANs and provide connectivity.

In an attempt to overcome the physical limitations of LANs, virtual LANs (VLAN) were developed. A VLAN can be viewed as a group of devices on different physical LAN segments which can communicate with each other as if they were all on the same physical LAN segment. VLANs provide a number of benefits over a LAN. Using VLANs, it is possible to group computing devices logically into a single broadcast domain. This allows to define broadcast traffic for these VLAN to just those devices that need to see it, thus reducing traffic to the rest of the network. There is an increased connection speed due to the elimination of latency from router connections. An additional benefit of increased security is realized if access from foreign networks is not allowed , i.e., those that originate from another subnet beyond the router. On top of that, it allows to define specific profiles with a restricted service like access to the Internet or to some part of the Intranet of a company or to the VoIP or part of it i.e. for the setup of an emergency call. Such restricted profile will be identified by a logical address corresponding to a specific WLAN.

Nowadays, a new technology became popular allowing to build a networks using wireless interfaces. Such technology allows to handle operations for accessing to a wired LAN through an air based on the standard IEEE 802.3. The wireless LAN WLAN technology includes various technologies defined in the standards IEEE 802.11 (a, b, g). WLANs can be used either to replace wired LANs, or as an extension of the wired LAN infrastructure.

A WLAN infrastructure is made of wireless terminal like wireless phones or portable computers and possibly but not necessarily access points AP, wherein data transmission between the terminals and the access points are carried out partly or entirely in a wireless manner using radio waves or infrared technology.

The structure of telecommunications networks is generally described using the OSI model (Open System Interconnection), which defines the interfaces through which the different devices and the related software communicate with each other. The OSI model is based on a concept of layers, the lowest, or first, layer known as a Physical Layer encompassing all logical, electrical and mechanical issues relating to data transfer. The second protocol layer, i.e. the Data Link Layer, is responsible for connection set-up, error correction and connection release. The third protocol layer, i.e. the Network Layer, provides data transfer not dependent on the network structure. The subsequent layers are the Transport Layer (fourth layer), Session Layer (fifth layer), Presentation Layer (sixth layer), and Application Layer (seventh layer).

Standardization provides a framework for hardware and software manufacturers to enable products of different manufacturers to be used side by side. The title of the WLAN standard is IEEE 802.11 and it has gradually been supplemented by a number of sub-standards. According to the forthcoming IEEE 802.11 i standard, WLAN authentication will be carried out according to a second protocol layer authentication method, such as an IEEE 802.1x protocol before transmission of IP packets between terminal device and the network. An Access Point enables authentication of the second protocol layer, such as IEEE 802.1x authentication.

The basic topology of a WLAN infrastructure is usually called a basic service set BSS consisting of two or more wireless nodes or stations (the wireless terminals), which have recognized each other and have established communications. In the most basic form, stations communicate directly with each other on a peer-to-peer level sharing a given cell coverage area. Such type of infrastructure is often formed on a temporary basis, and is commonly referred to as an adhoc network or independent basic service set IBSS.

In most instances, the BSS contains at least an access point AP. The main functions of an AP is to form a bridge between wireless and wired LANs. The AP is analogous to a base station to be used in cellular phone networks. When an AP is present, stations do not communicate on a peer-to-peer basis. All communications between stations or between a station and a wired network client go through the AP. AP's are not mobile and form part of the wired network infrastructure.

In wired LANs, an address is equivalent to a physical location. This is explicitly assumed in the design of wired LANs. In IEEE 802.11, the addressable unit is a station (STA). The STA is a message destination, but not (in general) a fixed location i.e. a wireless terminal. The logical addressing in this standard is defined such that the wireless media, distribution system, and wired LAN infrastructure can all use different address spaces usually medium access control MAC address. The standard IEEE 802.11 only specifies addressing for over the wireless medium, though it was intended specifically to facilitate integration with IEEE 802.3 wired Ethernet LANs. IEEE 802 48-bit addressing scheme was therefore adopted for 802.11, thereby maintaining address compatibility with the entire family of IEEE 802 standards. But in the vast majority of installations, the distribution system is a IEEE 802 wired LAN and all three logical addressing spaces are identical.

For WLAN, the security is rather a hot topic. Indeed, a restriction to an access is not physically given as for wired LAN through the physical wiring of the different terminals. Therefore, specific limitations were developed for WLAN. In the standard IEEE 802.11 was defined two methods for securing the communication between different entities of a WLAN, namely authentication and encryption. Authentication is the means by which one station is verified to have authorization to communicate with a second station in a given coverage area. In the infrastructure mode, authentication is established between an AP and each station (wireless terminal). Authentication can be either Open System or Shared Key. In an Open System, any station may request authentication. Open System authentication is the simplest of the available authentication algorithm where any station that requests authentication may become authenticated. But in real world, it has come that such authentication is simply of no use due to the lack of control which wireless terminals may get an access to the WLAN. And may be more than 90% of the implemented WLANs use a login procedure based on the medium access control MAC address of the different stations or wireless terminals. This procedure is based on the administration usually by some system manager of a list of the different MAC-addresses of the wireless terminals allowed to build a wireless link to the WLAN. Such user-defined list is a restrictive list of all the MAC addresses of the known and allowed stations which are granted an access to the WLAN. The system manager may administer the list from some desktop connected to the LAN. Each new entry or correction of a MAC address can be transmitted from the desktop to a switch of the LAN using simple network management protocol SNMP. To such switch may be connected a different server dealing with the authentication. Such a user-list as well as any updates has to be forward to each AP of the WLAN, the AP being connected to the LAN.

Therefore, for most of the existing WLAN and particularly in the infrastructure mode i.e. a WLAN comprising one or more AP, the access to such WLAN is simply restricted to the stations or wireless terminals known by the WLAN. Any other wireless terminals comprising a wireless interface but unknown to the WLAN will simply not have any access to it. In fact, a communication or link between such wireless terminal and a AP of the WLAN will simply not be possible to setup due to the unknown addressing (MAC) of such wireless terminal.

In EP 1 398 939 is described a processing server allocating user terminals resources of a LAN being a WLAN. The server is connected to at least one AP to the WLAN and includes control means. Latter is adapted to classify the wireless terminals in a first group or a second group according to whether or not they are adapted to establish with the WLAN communications encrypted in accordance with at least one format. The control means are also adapted to allocate resources of the WLAN to the wireless terminals attempting to establish communication therewith as a function of whether they are classified in said first group or said second group. The control means determine the MAC address of each wireless terminal attempting to establish communication with the WLAN. And the server allocates an IP address to the wireless terminal having the MAC address determined in this way using the dynamic host configuration protocol DHCP. The use of such a server as disclosed in EP 1 398 939 shall give a possibility to set up a connection of a restricted kind to the WLAN in the case the MAC address of the wireless terminal does not correspond to one of these two groups. The invention as disclosed in this prior art despite being quite attractive cannot be used in existing and to be built WLAN since not compliant with the applied standard. Indeed, in existing WLAN an AP is not able even to start any communication or set up a wireless link with an unknown wireless terminal. Therefore, it is simply not possible to let access to the WLAN in the case the corresponding MAC address of the wireless terminal was not identified and known.

Document WO 2004/013986 discloses a wireless terminal which, while not being authenticated by an access point, can nevertheless get a restricted ("guest") access to the access point and its associated guest virtual LAN.

### Summary of the invention

In view of the above, it is an object of the present invention to provide a wireless terminal and an access point AP of a wireless local area network WLAN able to exchange data for the setup of a communication while the wireless terminal being unknown to the AP. It is also an object of the present invention to provide a method for the setup of such an access to a local area network LAN between an AP of the WLAN being part of the LAN and a wireless terminal unknown to the AP, such an access being possibly adapted for a telecommunication like an emergency call.

This object is achieved in accordance with the invention by providing a wireless terminal and at least an access point AP of a WLAN, the wireless terminal and the AP comprising an interface for a wireless connection between each other and means for interacting via the interface by exchanging data frames. The interacting means are adapted for constructing generated data frames for transmission and for decoding received data frames. The wireless terminal and the AP are able to perform a restricted association while the wireless terminal being unknown to the AP. Such restricted association is identified by a specific data from an exchanged data frame. And the restricted association corresponds to a restricted access within the LAN being at least partly the WLAN, the restricted access being defined by a dedicated virtual LAN VLAN.

In an alternative of the embodiment according to the invention, the specific data is being sent from the wireless terminal to be received by the AP. Such action can be advantageously activated by an user of the wireless terminal when the user wishes the restricted access to the WLAN. This may be of great importance when an emergency call is required.

In another alternative according to the invention, it is the AP which transmits the specific data into a broadcast data frame to be received by the wireless terminal. It may be possible to implement the invention such that the AP transmits such broadcast data frame periodically. In a further embodiment of the present invention, the information relative to the dedicated VLAN identifying the restricted access within the LAN corresponding to the restricted association is provided by a switch of the LAN to the AP. In that way, the AP is able in an independent manner (without the need to negotiate with a switch for each restricted association) to let the wireless terminal having a restricted access to the WLAN.

In accordance with another aspect of the invention, its object is achieved by a method for setting up a wireless connection between a wireless terminal and an AP of a WLAN. The method comprises the step of starting a restricted association by exchanging a specific data between the wireless terminal and the AP while the wireless terminal being unknown to the AP. Such specific data identifies the restricted association corresponding to a restricted access within a LAN being at least partly the WLAN. And the restricted access is defined by a dedicated VLAN. The restricted access corresponds in an embodiment of the invention to a profile within the LAN for the user of the wireless terminal. Such profile can define a restricted access to e.g. an Intranet i.e. restricted access to a private network or to the Internet or to part or complete VLAN affected for voice communications.

Advantageous developments of the invention are described in the dependent claims, the following description and the drawings.

### Description of the drawings

An exemplary embodiment of the invention will now be explained further with the reference to the attached drawings in which:
- Fig. 1: is a schematic view of an architecture as used for the present invention;
- Fig. 2a, 2b: are two possible ways to perform an association according to the invention;
- Fig. 3: is a schematic view of a typical data frame comprising the specific data according to the invention.

### Detailed description of preferred embodiments

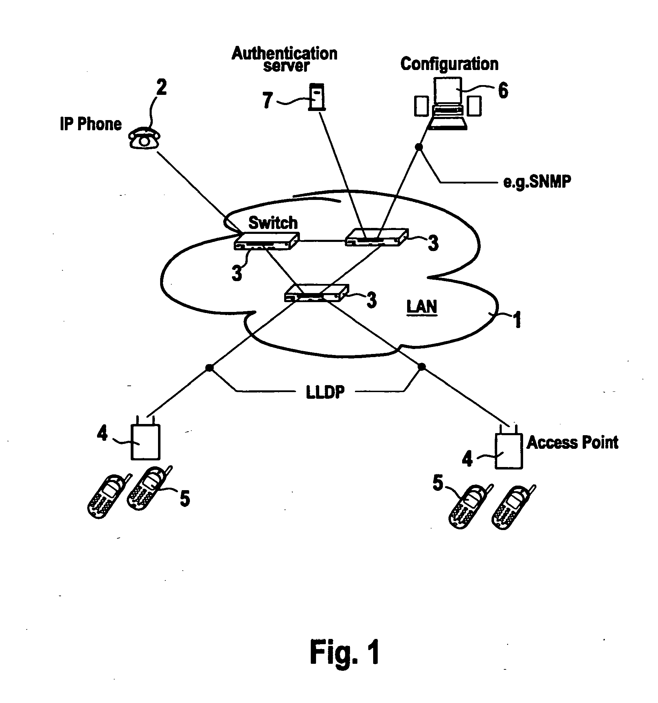

On figure 1 is shown an example of a network architecture as used for implementing the present invention. The network comprises a local area network LAN 1. Such LAN is made of a plurality of terminals like PCs, printers or IP-like phones not all shown on figure 1. Furthermore, the LAN 1 is made of several switches 3 interconnected between each other. This may be a typical architecture for a campus-like network i.e. a private network of a middle to big size. To this LAN 1 are connected several access points APs 4 building a WLAN. The APs 4 are possibly connected to the same switch 3 but could also be spread over the entire LAN 1. Wireless terminals called usually stations at the standard IEEE 802.11 are depicted as wireless phones 5. But other wireless terminals like PCs or laptops or any other kind of terminal comprising a wireless interface may also set up a link to the APs 4 as long as an association is possible (see below). A PC 6 connected to a switch 3 of the LAN 1 is shown and could correspond to the one of the system manager administering the present LAN 1. Also a authentication server 7 connected to a server 3 of the LAN 1 is shown while such authentication server could be also part of a switch 3 or the PC from the system manager 6. Such authentication server 7 is necessary when for example login procedure has to be performed before a user is able to connect to this LAN 1. It can be also used when authentication is required at the WLAN.

The standard IEEE 802.11 used as a standard for the WLAN provides link-level authentication between the different stations or wireless terminals and the APs. That standard does not provide either end-to-end (message origin to message destination) or user-to-user authentication. Rather authentication is used simply to bring the wireless link up to the assumed physical standards of a wired link. Such an authentication is independent of any authentication profiles that may be used in higher levels of a network protocol stack. As described above most of the implemented WLAN use as authentication procedure a restricted one based on the knowledge of the MAC-address by the WLAN of the different wireless terminals allowed to build a link with that LAN. Such MAC-addresses are administer usually but not exclusively by some system manager as a MAC-address list. This MAC-address list will be possibly stored at an authentication server like 7 of the LAN 1. The system manager has the task to update it via its PC 6 using e.g. simple network management protocol SNMP. Each APs 4 of the WLAN are provided by the updated MAC-address list from the corresponding switch 3. In that way, a wireless connection or link of a wireless terminal 5 and an AP 4 will take place only if the MAC-address of the wireless terminal 5 was already entered in that list of the MAC-address by the system manager. Otherwise, no association can take place.

When implementing the present invention, a wireless connection or link between an AP 4 and some unknown wireless terminal i.e. with a MAC-address not stored on the MAC-address list let available to the AP can nevertheless be set up according to the following specific requirement. Such wireless link corresponding to a restricted association between the AP of the WLAN and the wireless terminal when within its reach, will take place if specific data is exchanged via the wireless link identifying such restricted association. In such a way, after a restricted association was set up successfully with the wireless terminal, latter will have a restricted access within the LAN while such restricted access being identified by a dedicated virtual LAN VLAN.

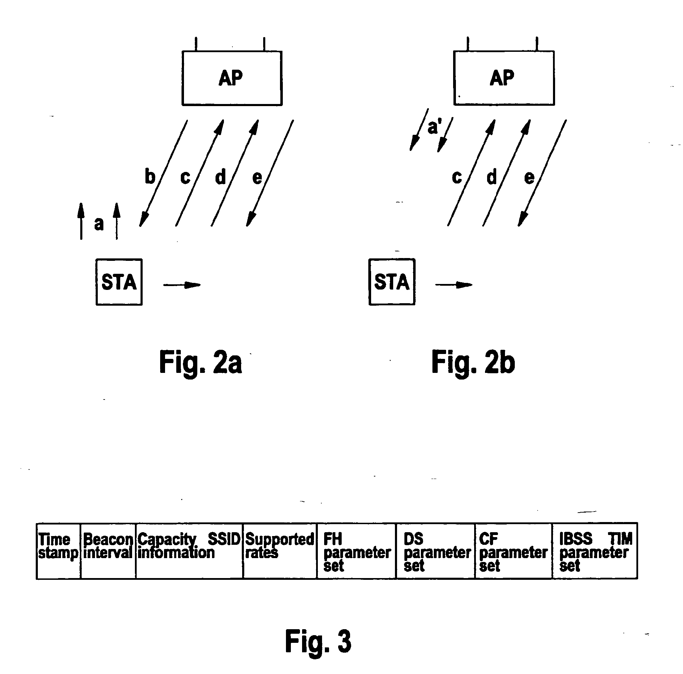

On figure 2a and 2b are shown two alternative ways to set up a wireless link for a restricted association according to the present invention. On figure 2a is shown the case where a wireless terminal or mobile station attempts to quickly locate an AP of a WLAN possibly but not exclusively after a user request at the wireless terminal for the restricted access. At first, a probe request frame a is transmitted by the wireless terminal without necessarily knowing if an AP is present and reachable. Such probe request frame contains together with the MAC-address of the wireless terminal unknown to the AP also the specific data identifying the required restricted association. And the coverage of the WLAN will depend on topology as well as the used wireless interface being radio or infrared and the used frequency band with e.g. around 2.4 GHz or 5 GHz and the data rates, such coverage reaching up to few kilometres while usually being more of few tens of meters. In the positive case that the AP received the specific data, then the AP will answer by a probe response b corresponding to this restricted association. Indeed, the AP when receiving the probe request frame a from the wireless terminal with its unknown address performs the procedure to find that address in its address list of the wireless terminal allowed to access to the WLAN. But since that address is not registered in the address list, the AP would lock any access from that wireless terminal to the WLAN if not receiving the specific data identifying the required restricted association. Therefore, despite being unknown to the AP a restricted association take place between the wireless terminal and the AP with first the authentication c followed by an association request d and finalized by the association response e opening the restricted association for the wireless terminal to the WLAN. Such restricted association corresponds to a restricted access within the LAN identified by a dedicated VLAN. Latter correspondence is only possible if the AP receives the information identifying such dedicated VLAN transmitted by some switch 3 of the LAN 1 using e.g. the logical link discovery protocol LLDP.

On figure 2b is shown the other alternative where such restricted association is started by the APs of the WLAN. This is the case when the AP transmits usually periodically a beacon broadcast to allow stations i.e. wireless terminals to locate and identify a BSS of a WLAN. In the context of the present invention, the APs of the WLAN may transmit the usual beacon broadcast assigned for known wireless terminal alternately with the beacon broadcast offering a restricted association to unknown wireless terminal. It is also possible to conceive that the beacon broadcast corresponding to the restricted access is transmitted in a parallel way by the APs or only by some limited numbers of such APs. In the present case of a beacon broadcast corresponding to the restricted association, the AP transmit the beacon frame a' to be received by the station or wireless terminal. After receiving such specific beacon frame comprising the specific data the wireless terminal proceeds with the usual authentication c followed by the association request d answered by the AP with an association response e opening the restricted access to the WLAN.

On figure 3 is shown a typical data frame exchanged between wireless terminals and APs within a WLAN. The broadcast probe request a of alternative shown on figure 2a as well as the beacon broadcast a' shown on alternative figure 2b are usually constructed according to the data frame as shown on figure 3. The data frame includes fixed fields such as times stamp, beacon interval, and capability information. The time stamp is a 64 bit field that contains the value of the stations (alternative 2 a) or the AP (alternative 2 b) synchronization timer at the time that a frame was transmitted. The beacon interval is the period of beacon transmission. The capability information field is a 16 bit field that identifies the capabilities of the station or AP. The information elements in a beacon or probe frame are the server set identifier SSID, supported rates, physical parameter sets (FH and DS) optional contention free CF parameter set, optional independent basic service set IDSS parameter set, and an optional traffic indication map TIM. The SSID will contain usually the MAC-address of the unknown wireless terminal at alternative 2a. In both alternatives, the specific data identifying the restricted association may be inserted either within the SSID or within the IBSS. Other possibilities for inserting the specific data may be conceivable as long as agreed in a standard way. Indeed, any wireless terminal of different manufacturers which have stored that specific data will be able to insert it into a data frame by their interacting means devoted for constructing data frames for transmission and for decoding received data frames via the wireless link. And any APs possibly of different manufacturers but provided or updated possibly via the link by the switch e.g. using LLDP with this specific data will be able to set up such restricted association when exchanging that specific data within a data frame with a wireless terminal.

A restricted association corresponding to a restricted access within the LAN identified by a dedicated VLAN can be applied for different restricted profiles depending on the requirement. Each restricted profile will be identified by a specific dedicated VLAN, such identification being let available to the APs of the WLAN by the switch possibly using LLDP. A restricted profile could well be dedicated for the setup of an emergency call using the usual phone number 112 in Europe and 009 in the US. In that case, when a user of a wireless terminal starts to dial the emergency phone number on his wireless terminal comprising the wireless interface and interacting means for inserting the specific data, the following procedure could take place. Even before starting to try to set up this emergency phone call and with the requirement to be within the coverage of a WLAN, the interacting means of the wireless terminal will first transmits the specific data corresponding to such emergency call over the data frame a (broadcast probe request) as shown on figure 2a. And in the case, the association with a AP was successfully performed only then the AP will let (in a transparent way) the wireless terminal have an access (usually restricted) to the dedicated VLAN for such emergency call.

A restricted profile may have other application like the possibility to let available to unknown wireless terminal to some specific services of a private network when within the coverage of that WLAN. Such specific services are possibly not confidential or cost intensive like the access (restricted) to the Internet or to some part of the intranet of that private network or to some private phone book. All these different restricted accesses corresponding to different specific data to be exchanged will be identified by different dedicated VLAN, well known by the APs of the WLAN being at least part of the LAN.

## Claims

1. A wireless terminal (5) comprising an interface for a wireless link to a Local Area Network /LAN/ being at least partly a Wireless LAN /WLAN/ and means for interacting via the interface with the WLAN by exchanging data frames, the interacting means being adapted for constructing data frames for transmission and for decoding received data frames and are **characterised in that** when decoding specific data fro a received beacon frame broadcasted periodically by a Access Point /AP/ (4) of the WLAN while the specific data identifying a restricted association with that AP for unknown wireless terminal, then the wireless terminal (5) while being unknown is able to exchange data frames with that AP (4) for the setup of a communication within that restricted association corresponding to a restricted access within the LAN identified by a dedicated Virtual LAN /VLAN/.

2. The wireless terminal (5) according to claim 1 **characterised in that** the data frames to be exchanged for that setup comprises authentication and association requests.

3. The wireless terminal (5) according to claim 1 **characterised in that** the authentication request being of the Open System kind.

4. The wireless terminal (5) according to claim 1 **characterised in that** the restricted access being adapted for the setup of an emergency call.

5. An Access Point /AP/ (4) of a Wireless Local Area Network /WLAN/, the AP (4) comprising an interface for wireless links with wireless terminals (5) and means for interacting via the interface with the wireless terminals (5), the interacting means being adapted for constructing data frames for transmission and for decoding received data frames, the AP (4) is **characterised in that** it is adapted to broadcast periodically a beacon frame comprising specific data identifying a restricted association with unknown wireless terminal, that specific data to be decoded by a wireless terminal (5) from a received beacon frame to be able while being unknown to exchange data frames with that AP (4) for the setup of a communication within that restricted association corresponding to a restricted access within the LAN identified by a dedicated Virtual LAN /VLAN/.

6. The AP (4) according to claim 5 **characterised in that** it is provided with the identification of the dedicated VLAN by a switch of the LAN, allowing the AP (4) to let the unknown wireless terminal an access to the VLAN.

7. The AP (4) according to claim 5 **characterised in that** the restricted access being adapted for the setup of an emergency call.

8. A method for setting up a wireless link between a wireless terminal (5) and an Access Point /AP/ (4) of a Wireless Local Area Network /WLAN/, the wireless terminal (5) and the AP (4) comprising an interface for the wireless link and means for interacting via the interface by exchanging data frames, the interacting means being adapted for constructing data frames for transmission and for decoding received data frames, the method being **characterised by** the following steps:
• Periodically broadcasting by the AP (4) a beacon frame comprising specific data identifying a restricted association corresponding to a restricted access within a LAN being at least partly the WLAN, the restricted access being defined by a dedicated Virtual LAN VLAN;
• Receiving said beacon frame by a unknown wireless terminal;
• Decoding by the interacting means from the wireless terminal (5) the specific data from the received beacon frame;
• Exchanging data between the wireless terminal (5) and the AP (4) for the setup of a communication within that restricted association.

9. The method according to claim 8 **characterised by** providing the AP (4) by a switch of the LAN with the identification of the dedicated VLAN allowing the AP (4) to let the unknown wireless terminal to access the VLAN.

10. The method according to the claim 8 **characterised by** applying it for a restricted access being adapted for the setup of an emergency call.

11. The method according to the claim 8 **characterised by** applying it for a restricted access corresponding to a profile within the LAN for the user of the wireless terminal (5) being unknown to the WLAN.

## Patentansprüche

1. Drahtloses Endgerät (5) mit einer Schnittstelle für eine drahtlose Verbindung zu einem lokalen Netzwerk ("Local A-rea Network", LAN), das zumindest teilweise ein drahtloses LAN (WLAN) ist, das Mittel zur Interaktion über die Schnittstelle mit dem WLAN durch den Austausch von Datenrahmen umfasst, wobei die Interaktionsmittel so angepasst sind, dass sie zu sendende Datenrahmen konstruieren und empfangene Datenrahmen dekodieren, wobei die Interaktionsmittel **dadurch gekennzeichnet sind, dass** sie spezifische Daten aus einem empfangenen, von einem Zugangspunkt ("Access Point", AP) (4) des WLAN über Broadcasting periodisch übertragenen Beacon-Rahmen dekodieren, wobei die spezifischen Daten eine eingeschränkte Zuordnung für ein unbekanntes drahtloses Endgerät zu diesem Zugangspunkt kennzeichnen und das drahtlose Endgerät (5) zwar nicht bekannt ist, aber dennoch Datenrahmen mit diesem Zugangspunkt (4) austauschen kann zum Einrichten einer Kommunikation innerhalb dieser eingeschränkten Zuordnung, wobei die eingeschränkte Zuordnung einem eingeschränkten Zugriff innerhalb des durch ein dediziertes virtuelles LAN VLAN **gekennzeichnet**en LAN entspricht.

2. Drahtloses Endgerät (5) gemäß Anspruch 1, **dadurch gekennzeichnet, dass** die auszutauschenden Datenrahmen für diese Einrichtung Anforderungen zur Authentifizierung und zur Zuordnung umfassen.

3. Drahtloses Endgerät (5) gemäß Anspruch 1, **dadurch gekennzeichnet, dass** die Authentifizierungsanforderung den Typ Offenes System ("Open System") hat.

4. Drahtloses Endgerät (5) gemäß Anspruch 1, **dadurch gekennzeichnet, dass** der eingeschränkte Zugriff für die Einrichtung eines Notrufs angepasst ist.

5. Zugangspunkt ("Access Point", AP) (4) eines drahtlosen lokalen Netzwerks ("Wireless Local Area Network", WLAN), wobei der Zugangspunkt (4) eine Schnittstelle für drahtlose Verbindungen mit drahtlosen Endgeräten (5) umfasst und Mittel zur Interaktion mit den drahtlosen Endgeräten (5) über die Schnittstelle, wobei die Interaktionsmittel für die Konstruktion von zu sendenden Datenrahmen und die Dekodierung empfangener Datenrahmen angepasst sind, wobei der Zugangspunkt (4) **dadurch gekennzeichnet ist, dass** er so angepasst ist, dass er in regelmäßigen Abständen ein Beacon-Broadcast-Signal mit spezifischen Daten sendet, die eine eingeschränkte Zuordnung zu einem nicht bekannten drahtlosen Endgerät kennzeichnen, wobei diese spezifischen Daten von einem drahtlosen Endgerät (5) aus einem empfangenen Beacon-Rahmen dekodiert werden sollen, um, auch wenn es nicht bekannt ist, auf diese Weise Datenrahmen mit diesem Zugangspunkt (4) austauschen zu können zum Einrichten einer Kommunikation innerhalb dieser eingeschränkten Zuordnung, die einem eingeschränkten Zugriff innerhalb eines LAN entspricht, das von einem dedizierten virtuellen LAN/VLAN **gekennzeichnet** wurde.

6. Zugangspunkt (4) gemäß Anspruch 5, **dadurch gekennzeichnet, dass** ihm die Identifizierung des dedizierten VLAN von einer Vermittlungsstelle ("Switch") des LAN bereitgestellt wird, um dem Zugangspunkt (4) die Möglichkeit zu geben, dem drahtlosen Endgerät den Zugriff auf das VLAN zu erteilen.

7. Zugangspunkt (4) gemäß Anspruch 5, **dadurch gekennzeichnet, dass** der eingeschränkte Zugriff für die Einrichtung eines Notrufs angepasst ist.

8. Verfahren zum Einrichten einer drahtlosen Verbindung zwischen einem drahtlosen Endgerät (5) und einem Zugangspunkt (4) eines drahtlosen lokalen Netzwerks (WLAN), wobei das drahtlose Endgerät (5) und der Zugangspunkt (4) eine Schnittstelle für die drahtlose Verbindung umfassen und Mittel zur Interaktion über die Schnittstelle durch den Austausch von Datenrahmen, wobei die Interaktionsmittel für die Konstruktion von zu sendenden Datenrahmen und für die Dekodierung empfangener Datenrahmen angepasst sind, und wobei das Verfahren durch die folgenden Schritte **gekennzeichnet** ist:
• Regelmäßiges Senden eines Beacon-Broadcast-Signals mit spezifischen Daten durch den Zugangspunkt (4), wobei diese spezifischen Daten eine eingeschränkte Zuordnung kennzeichnen, die einem eingeschränkten Zugriff innerhalb eines LAN entspricht, das zumindest teilweise dem WLAN entspricht, wobei der eingeschränkte Zugriff von einem dedizierten virtuellen LAN/VLAN definiert wurde;
• Empfangen dieses Beacon-Rahmens durch ein nicht bekanntes drahtloses Endgerät;
• Dekodieren der spezifischen Dateien aus dem empfangenen Beacon-Rahmen durch die Interaktionsmittel des drahtlosen Endgeräts (5);
• Austauschen von Daten zwischen dem drahtlosen Endgerät (5) und dem Zugangspunkt (4) für die Einrichtung einer Kommunikation innerhalb dieser eingeschränkten Zuordnung.

9. Verfahren gemäß Anspruch 8, **gekennzeichnet durch** die Bereitstellung der Identifizierung des dedizierten (32, 34) LAN an den Zugangspunkt (4) **durch** eine Vermittlungsstelle des LAN, um dem Zugangspunkt (4) die Möglichkeit zu geben, dem drahtlosen Endgerät den Zugriff auf das VLAN zu erteilen.

10. Verfahren gemäß Anspruch 8, **gekennzeichnet durch** die Anwendung dieses Verfahrens für einen eingeschränkten Zugriff, der für die Einrichtung eines Notrufs angepasst ist.

11. Verfahren gemäß Anspruch 8, **gekennzeichnet durch** die Anwendung dieses Verfahrens für einen eingeschränkten Zugriff, der einem Profil innerhalb des LAN entspricht für den Benutzer des dem WLAN nicht bekannten drahtlosen Endgeräts (5).

## Revendications

1. Terminal mobile (5) comprenant une interface pour une liaison sans fil à un réseau local/LAN étant au moins en partie un réseau local sans fil/WLAN et des moyens destinés à interagir via l'interface avec le WLAN en échangeant des trames de données, les moyens d'interaction étant adaptés pour construire des trames de données pour leur transmission et pour décoder les trames de données reçues, **caractérisé en ce que** lors du décodage de données spécifiques d'une trame de balisage reçue diffusée de façon périodique par un point d'accès/AP (4) du WLAN alors que les données spécifiques identifient une association restreinte avec cet AP pour un terminal mobile inconnu, alors le terminal mobile (5), bien qu'il soit inconnu, est capable d'échange des trames de données avec cet AP (4) pour l'établissement d'une communication selon cette association restreinte correspondant à un accès restreint dans le LAN identifié par un LAN virtuel dédié/VLAN.

2. Terminal mobile (5) selon la revendication 1, **caractérisé en ce que** les trames de données à échanger pour cet établissement d'appel comprennent des demandes d'authentification et d'association.

3. Terminal mobile (5) selon la revendication 1, **caractérisé en ce que** la demande d'authentification est du type système ouvert.

4. Terminal mobile (5) selon la revendication 1, **caractérisé en ce que** l'accès restreint est adapté à l'établissement d'un appel d'urgence.

5. Point d'accès/AP (4) d'un réseau local sans fil/WLAN, l'AP (4) comprenant une interface pour des liaisons sans fil avec des terminaux mobiles (5) et des moyens destinés à interagir via l'interface avec les terminaux mobiles (5), les moyens d'interaction étant adaptés pour construire des trames de données pour leur transmission et pour décoder les trames de données reçues, **caractérisé en ce qu'**il est adapté pour diffuser périodiquement une trame de balisage comprenant des données spécifiques identifiant une association restreinte avec un terminal mobile inconnu, ces données spécifiques devant être décodées par un terminal mobile (5) à partir d'une trame de balisage reçue afin de pouvoir, tout en étant inconnu, échanger des trames de données avec cet AP (4) pour l'établissement d'une communication selon cette association restreinte correspondant à un accès restreint dans le LAN identifié par un LAN virtuel dédié/VLAN.

6. AP (4) selon la revendication 5, **caractérisé en ce qu'**il est muni de l'identification du VLAN dédié par un commutateur du LAN, ce qui permet à l'AP (4) de laisser au terminal mobile inconnu un accès au VLAN.

7. AP (4) selon la revendication 5, **caractérisé en ce que** l'accès restreint est adapté à l'établissement d'un appel d'urgence.

8. Procédé d'établissement d'une liaison sans fil entre un terminal mobile (5) et un point d'accès/AP (4) d'un réseau local sans fil/WLAN, le terminal mobile (5) et l'AP (4) comprenant une interface pour la liaison sans fil et des moyens destinés à interagir via l'interface en échangeant des trames de données, les moyens d'interaction étant adaptés pour construire des trames de données pour leur transmission et pour décoder les trames de données reçues, le procédé étant **caractérisé par** les étapes suivantes :
- diffusion périodique par l'AP (4) d'une trame de balisage comprenant des données spécifiques identifiant une association restreinte correspondant à un accès restreint dans le LAN étant au moins en partie le WLAN, l'accès restreint étant défini par un LAN virtuel dédié VLAN ;
- réception de ladite trame de balisage par un terminal mobile inconnu ;
- décodage par les moyens d'interaction du terminal mobile (5) des données spécifiques de la trame de balisage reçue ;
- échange des données entre le terminal mobile (5) et l'AP (4) pour l'établissement d'une communication selon cette association restreinte.

9. Procédé selon la revendication 8, **caractérisé par** la fourniture à l'AP (4) par un commutateur du LAN de l'identification du VLAN dédié, permettant à l'AP (4) de laisser au terminal mobile inconnu l'accès au VLAN.

10. Procédé selon la revendication 8, **caractérisé par** son application à un accès restreint adapté à l'établissement d'un appel d'urgence.

11. Procédé selon la revendication 8, **caractérisé par** son application à un accès restreint correspondant à un profil dans le LAN pour l'utilisateur du terminal mobile (5) qui est inconnu du WLAN.
